# EUROPEAN PATENT APPLICATION

(11) **EP 1 209 779 A1**
(43) Date of publication of application: **29.05.2002**
(21) Application number: 00440311.9
(22) Date of filing: 27.11.2000
(51) Int. Cl.: H01S 3/067, H01S 3/102

(54) **Optical fiber amplifier having a heating system for controlling the temperature of an amplifying fiber and corresponding method**

(71) Applicant: ALCATEL, 75008 Paris (FR)
(72) Inventor: Rousseau, Jean-Claude, 91625 Nozay (FR); D'Almeida, Oscar, 91625 Nozay (FR); Bayart, Dominique, 92140 Clamart (FR); Faure, Benoît, 91625 Villarceaux (FR); Gasca, Laurent, 91400 Orsay (FR)
(74) Representative: Rausch, Gabriele, Dr.

(57) **Abstract**

The invention relates to an optical fibre amplifier (OFA) having a controllable heating system for adjusting and stabilizing the temperature of a fibre, wherein the heating system comprises a heat-generating fibre coating (TC) that has an electrical connection for applying a heating voltage or injecting a heating current (I1, I2) for the purpose of heat generation, wherein the heat-generating fibre coating (TC) surrounds at least a part of the fibre (OF), and also a method therefor.

## Description

The invention relates to an optical fibre amplifier having a controllable heating system for adjusting and stabilizing the temperature of an amplifying fibre and also a method of adjusting and stabilizing a gain spectrum of an optical fibre amplifier.

Rare-earth-doped fibre amplifiers, for example erbium-doped fibre amplifiers (EDFAs) comprise a fibre segment that is doped over a certain length, for example 2 to 100m, with rare earths, for example erbium. The amplifying fibre segment is generally connected to the transmission fibre via an optical coupler. In an (erbium) fibre amplifier, stimulated emission of light occurs within a wide wavelength range between 1490 to 1650 nanometres, a range in which optical waveguides have a very low attenuation. As a result of the stimulated emission, a weak input signal is amplified by a multiple as it passes through the fibre amplifier. To achieve such stimulated emission, the erbium ions have to be converted to an excited state. For this purpose, energy, so-called pump energy or pump light, in the form of light of a lower wavelength than the wavelength of the input signal to be amplified, i.e. light of higher energy, is injected into the fibre amplifier. The pump light is launched in or against the signal direction via a coupler to which the amplifying fibre segment is connected. Fibre amplifiers of very different design are described in the literature.

Although the stimulated emission of the fibre amplifier results, as described, in a gain in a wide wavelength range, it does not result in a wavelength-independent gain factor, i.e. a gain factor that is constant over the said wavelength range, but in a so-called gain spectrum, i.e. a variation in the gain in the said wavelength range. If the wavelength-division multiplex (WDM) method is used, in which light signals of different wavelengths are simultaneously transmitted via an optical waveguide within a wavelength range, this results in a different gain for the various light signals. In the case of typical transmission over a fairly long link, the light signals have to be repeatedly amplified at certain distances to compensate for the attenuation; for WDM light signals transmitted separately with the same intensity, this may result in an unacceptably large variation in the intensity of the light signals received at the end of the transmission link.

The above mentioned gain spectrum of a fibre amplifier results from its so-called inversion spectrum that is produced as a result of the fact that electrons of the erbium ions embedded in the glass of the fibre core are excited to a whole host of different energy levels when the pump light is incident. When a light signal of a certain wavelength to be amplified is incident, an energy level corresponding to said wavelength is stimulated, as a result of which an emission of light having precisely said wavelength takes place.

The inversion spectrum of a fibre amplifier is dependent on the temperature of the amplifying fibre; this consequently results in a dependence of the gain spectrum on the temperature. Patent Application WO 00/01101 offers a solution to the problem of large variations in the gain spectrum described above by bringing at least a part of the amplifying fibre of a fibre amplifier to a certain temperature at which the inversion spectrum in the region of interest, i.e. in the region in which the WDM light signals are situated, is as uniform as possible, i.e. exhibits no large variations over the wavelength. A temperature control device keeps the temperature of the fibre amplifier as constant as possible at a certain temperature.

There are two basic variants for adjusting the temperature: in a first variant, a temperature close to the mean ambient temperature, for example near 30° Celsius, is chosen. For this purpose, as a rule, both heating and cooling elements have to be provided that are activated according to the ambient temperature. However, this variant results in a complex structure of the fibre amplifier and is consequently a cost-intensive solution. In a second variant, a temperature is chosen that is higher than the maximum ambient temperature encountered, for example 60° Celsius. In that case, only heating elements are needed to stabilize the temperature. This results in a simple and inexpensive structure compared with the first variant. One problem of said inexpensive variant is, however, that certain elements of the fibre amplifier, in particular the pump diode, are unsuitable for continuous operation at continuously high temperatures. A further problem is the energy required, which is on the whole high, to generate the high temperature, which requirement can be contained only by an extensive insulation of the fibre amplifier.

Proceeding from the solution, described in said Patent Application WO 00/01101 for stabilizing the gain spectrum of a fibre amplifier, a fibre amplifier is disclosed here in which the heating energy is fed in a controlled manner to the amplifying fibre, the other components of the fibre amplifier being affected by as little as possible by the heating.

According to the invention, this object is achieved by an optical fibre amplifier according to the teaching and also by a method according to the teaching of the independent claims.

The basic idea of the invention is to provide the amplifying fibre at least partly with a heat-generating fibre coating. When a heating voltage is applied or a heating current is injected, the fibre coating generates heat energy, as a result of which the amplifying fibre is heated directly to an adjustable temperature.

In an advantageous development of the invention, the heat-generating fibre coating comprises two or more segments that can be heated independently to different temperatures.

Further advantageous refinements of the invention are to be found in the dependent claims and in the description.

The invention is explained further below with the aid of the drawings:
Figure 1 shows diagrammatically a cross section through an amplifying fibre, clad in a heat-generating fibre coating, of a fibre amplifier according to the invention and
Figure 2 shows an exemplary block circuit diagram of a fibre amplifier according to the invention having two heating segments.

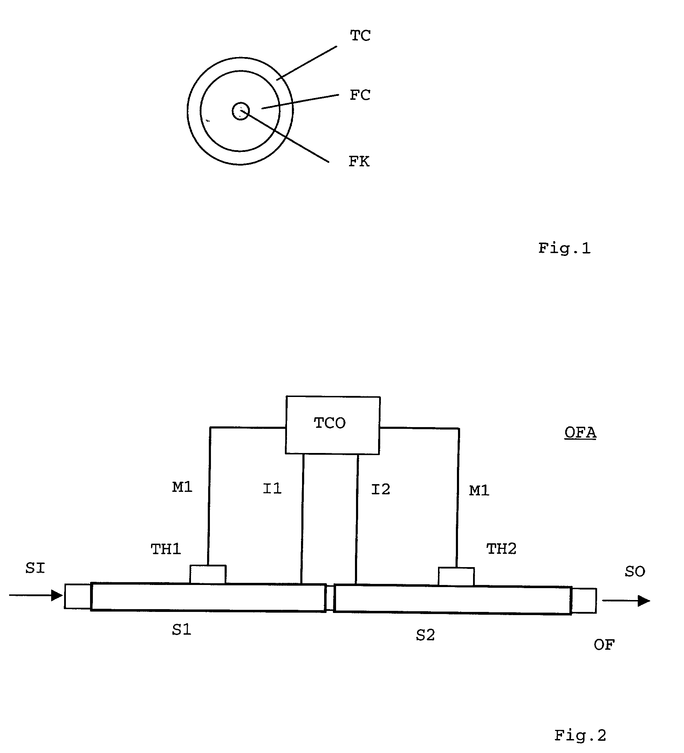

Figure 1 shows diagrammatically a cross section through an amplifying fibre of a fibre amplifier according to the invention having a fibre core (FK), a fibre cladding FC surrounding the fibre core and a (heat-generating) fibre coating TC surrounding said fibre cladding FC.

A light signal radiated into the fibre is guided in the fibre core FK. In the fibre amplifier, the fibre core of a fibre is doped over a certain length with erbium; this part is the amplifying medium or the (amplifying) fibre of the fibre amplifier. The gain spectrum of a fibre amplifier is dependent on the temperature of the fibre. For a selected wavelength range, certain temperatures can be found at which the gain spectrum inside said wavelength range has a lower variation compared with other temperatures.

To achieve a simple structure of a fibre amplifier according to the invention, no use is made here of cooling elements; consequently, a temperature that is situated above the maximum ambient temperature of the fibre amplifier to be expected is chosen as the operating temperature of the fibre. Depending on the actual ambient temperature, a certain heating energy has to be applied so that the fibre reaches the desired operating temperature. For this purpose, a heating current is injected into the fibre coating TC, for example by applying an appropriate voltage to annular electrical contacts at the two ends of the fibre coating, which current results in an ohmic power dissipation and, consequently, in a generation of heat energy in the fibre coating. The heat energy is dependent on the electrical resistivity of the material and the geometrical shape of the fibre coating TC.

So that the fibre coating TC introduces the heat generated as uniformly as possible into the fibre over its entire length, it has a uniform thickness over its entire length, is composed of an electrically conducting material that is as homogeneous as possible and encompasses the fibre as far as possible without air inclusions.

So that the heat generated is fed into the fibre without loss, i.e. as exclusively as possible, and the other components of the fibre amplifier are affected as little as possible by the said heat generation, the fibre, including the fibre coating, is thermally insulated. For this purpose, the fibre clad in the fibre coating TC is further clad in an insulating layer and/or the fibre winding is clad as a whole and, consequently, thermally insulated from the other components of the fibre amplifier. On the one hand, this prevents the other elements of the fibre amplifier being unnecessarily heated and, on the other hand, as little heat energy as possible is consumed without further extensive insulation being necessary. By eliminating extensive insulations, markedly smaller overall sizes for a fibre amplifier can be achieved compared with the prior art.

So that the selected operating temperature can be permanently maintained as accurately as possible, the temperature of the fibre coating TC is measured at at least one point and the heating current adjusted accordingly. The description relating to Figure 2 below contains a detailed presentation of a possible method for regulating the heating current.

In applying the method described above, physical limits are imposed on achieving an inversion spectrum having as small a variation as possible over wavelength. Thus, as a rule, no temperature can be determined at which significant dips and/or peaks in the inversion spectrum do not occur. According to the prior art, the inversion spectrum can be smoothed by using wavelength-dependent filters that are introduced into the fibre, for example, as a Bragg grating. A fibre amplifier according to the invention described above can advantageously be operated in combination with such wavelength-dependent filters since an expedient use of such filters necessarily implies a fibre amplifier having stable gain behaviour.

The wavelength-dependent filters for smoothing the inversion spectrum have, however, the disadvantage that they partly reduce the gain of the fibre amplifier again. An advantageous development of an above-described fibre amplifier in which a smooth gain spectrum can be achieved within a chosen wavelength range even without the use of wavelength-dependent filters is described here with reference to Figure 2.

For this purpose, Figure 2 shows diagrammatically a fibre amplifier OFA having a (amplifying) fibre OF that is surrounded over a respective part of its length by a first (coating) segment S1 and a second (coating) segment S2, having a first thermistor TH1 thermally connected to the first segment S1, having a second thermistor TH2 thermally connected to the second segment S2 and having a temperature control device TCO to which the two thermistors TH1 and TH2 are connected via an electrical conductor carrying a first measurement current M1 or a second measurement current M2, respectively. Furthermore, the temperature control device TCO is connected to the two segments S1 and S2 via an electrical conductor carrying a first heating current I1 or a second heating current I2, respectively. An (optical) input signal SI is irradiated into one end of the fibre OF and an (optical) output signal SO is radiated from the other end of the fibre OF.

The fibre amplifier OFA is divided here by way of example into two equally long heating regions having the segments S1 and S2. Each of said segments S1 and S2 is independently heated to a certain temperature in each case. To heat, for example, the first segment S1 to a certain first temperature T1, a certain heating current I1 is applied to said segment S1. The temperature control device TCO regulates said current as a function of the actual temperature of the first segment S1. Thus, for example, a regulation can take place in such a way that, if an upper temperature threshold above the desired operating temperature is exceeded, the first heating current I1 is switched off and, in the event of a lower temperature threshold below the desired operating temperature being undershot, a constant heating current I1 is applied. In this connection, the temperature can be measured at constant time intervals, for example at intervals of a few seconds.

The thermistors TH1 and TH2 are electrical resistors that have a resistance value dependent on the respective actual temperature. The variation in the resistance value with temperature, i.e. the temperature characteristic, which is identical for the two thermistors TH1 and TH2, is stored in the temperature control device TCO. The thermistors TH1 and TH2 are preferably constructed as flat strips that are each applied directly to the first segment S1 or the second segment S2. To determine the temperature, for example, of the first segment S1, the temperature control device TCO applies a certain measurement voltage via the electrical connection to the first thermistor TH1 and measures the required first measurement current M1. The actual resistance of the first thermistor TH1 is then determined from the ratio of the measurement voltage to the first measurement current M1. The actual temperature is then determined from a comparison of the actual resistance value determined with the stored temperature characteristic of the thermistors TH1 and TH2.

As described above, the inversion spectrum changes with the temperature of the fibre OF. If the different segments S1 and S2 of the fibre amplifier OFA are now adjusted to different temperatures, said fibre amplifier OFA can be thought of as an amplifier chain comprising a plurality of fibre amplifiers connected one behind the other, each of said fibre amplifiers having a specific gain spectrum appropriate to its temperature. The resultant gain spectrum of said amplifier chain is given by multiplying all the gain spectra of the (imaginary) individual fibre amplifiers, i.e. the resultant gain factor as the ratio of the intensity of the output signal SO of a certain wavelength to the intensity of the input signal SI of said wavelength corresponds to the multiplication of the gain factors of the individual fibre amplifiers. With such an arrangement, it is possible to adjust the individual temperatures of the segments S1 and S2 in such a way that the resultant gain spectrum has a smaller variation compared with each individual gain spectrum. In this connection, the individual segments S1 and S2 do not have to have an identical length.

The invention is not restricted only to optical fibre amplifiers made of glass fibres, but to all fibre amplifiers. In this connection, the materials for the amplifying fibre may also be other glasses - halide glass or fluoride glass, such as ZBLAN (Zr-Ba-La-Al-Na) - or even plastic fibres. The doping used has been chosen here only by way of example. It depends also on the band of the signal used. The invention can be applied to systems in the XL, L, C and S band.

## Claims

1. Optical fibre amplifier (OFA) with a controllable heating system for adjusting and stabilizing the temperature of an amplifying fibre, **characterized in that** the heating system comprises a heat-generating fibre coating (TC) that has an electrical connection for applying a heating voltage or injecting a heating current (I1, I2) to generate heat, wherein the heat-generating fibre coating (TC) encases at least a part of the amplifying fibre (OF).

2. Optical fibre amplifier (OFA) according to Claim 1, **characterized in that** a thermally variable resistor (TH1, TH2) is thermally connected to said fibre coating (TC) to determine the temperature of the heat-generating fibre coating (TC) and is electrically connected to a temperature control device (TCO) that controls the heating voltage or the heating current (I1, I2).

3. Optical fibre amplifier (OFA) according to Claim 1, **characterized in that** the fibre coating (TC) is subdivided into two or more cladding segments (S1, S2), wherein each segment (S1, S2) can be individually adjusted to a certain temperature.

4. Method of adjusting and stabilizing a gain spectrum of an optical fibre amplifier (OFA), in particular an erbium-doped fibre amplifier, in which the amplifying fibre (OF) is heated to a certain temperature by regulated heat delivery of a heating source and is held stably within certain limits, **characterized in that** the temperature is adjusted in a fibre coating (TC) cladding the amplifying fibre (OF) by applying a heating voltage or by injecting a heating current (I1,

5. Method according to Claim 4, **characterized in that** the heating voltage or the heating current (I1, I2) is regulated as a function of the temperature of the fibre coating (TC) measured by a thermally variable resistor (TH1, TH2).

6. Method according to Claim 4, **characterized in that** a gain spectrum is produced within a certain wavelength range by heating the amplifying fibre (OF) in sections (S1, S2) to a certain temperature in each case.
